# EUROPEAN PATENT APPLICATION

(11) **EP 3 813 391 A1**
(43) Date of publication of application: **28.04.2021**
(21) Application number: 19205287.6
(22) Date of filing: 25.10.2019
(51) Int. Cl.: H04W 4/14, H04W 4/50, H04L 29/06

(54) **METHOD FOR SUPPORTING MESSAGING IN A PS DOMAIN NETWORK**

(71) Applicant: THALES DIS AIS Deutschland GmbH, 81541 München (DE)
(72) Inventor: BREUER, Volker, 16727 BOETZOW (DE); DUMMANN, Uwe, 16341 PANKETAL (DE)
(74) Representative: Grevin, Emmanuel

(57) **Abstract**

The present invention relates to a method for a user equipment operating in a cellular network
configured for supporting at least one IP-based multimedia service, the user equipment comprising a stored set of configuration parameter for the IP based multimedia service,
comprising the steps of:
- sending a request message for the IP-based multimedia service to the cellular network,
- in case of not receiving a confirmation message for said request message: sending a data message via non-access-stratum messaging to the corresponding network component.

## Description

### FIELD OF THE INVENTION

The present invention relates to a method for a user equipment. The invention also pertains to a user equipment using said method.

The invention further relates to a method for a cellular network. It further pertains to a cellular network using said method. The invention additionally relates to a remote server communicatively coupled to the cellular network.

### BACKGROUND OF THE INVENTION

In the field of wireless cellular communication it is known that messaging services, in particular the short message service (SMS) is available at any time without special precondition, once a user equipment (UE) camps on a base station (BS) of the cellular network and has successfully registered. This is especially true for 2G, 3G and 4G cellular networks especially when the 4G cellular networks are also connected to the legacy circuit switched SMS service center.
This applies in particular to mobile or fixed user equipments without man-machine-interface (MMI) for autonomous operation, that means where no human operator can carry out manually any kind of configuration.
Hence this service can be used as reliable backbone for a couple of advanced services, including emergency service, especially carried out via a cellular network towards an application server, but also other services, which require a configuration in either direction without direct interaction of a user but as a remote service.
The latter relates in particular to packet based service using a server in or at least communicatively coupled to the cellular network. For a user equipment operating the first time in that cellular network, the IP address of such a server is easily provided through a messaging service on request from the user equipment. This is in particular true for services not managed by the cellular network.

Hence in the light of a move to 4G/5G networks, where the circuit switched domain of 2G might not be available anymore, such services are at risk, due to unavailability of the messaging services. Known alternatives, like SMS over IP, first require a setup of an IP connection including correct access point (APN configuration) and configuration of an IMS service, and are therefore not immediately available for all user equipments operating in a cellular network. The UE may not have the correct APN available for such connection or the correct configuration for said cellular network may not be available in the UE. When SMS via IP is intended, the UE needs to connect to the packet-switched (PS) network, and further needs to use the correct APN and related configuration in said network with respect to the packet domain. In case of long living devices, i.e. devices staying in the field for up to 20 years it may happen that 2G/3G cellular network switch, which have been the reliable fallback, may have reached their sunset and the LTE or NR networks came up. It may appear that the technology is supported by the UE, but it does not have the correct configuration (e.g. APN available to establish a connection). Anyway LTE and NR networks are still in their roll-out process and SMS via IP may be one of the function to be added to those cellular networks, hence also for user equipments in the field being absent for smaller times required configuration update need to be necessary.

It is therefore the goal of present invention to overcome the mentioned disadvantages and to propose a solution for providing a fallback messaging service in the PS domain, in particular in 4G/5G cellular networks.
Further alternative and advantageous solutions would, accordingly, be desirable in the art.

### SUMMARY OF THE INVENTION

For this it is according to a first aspect of the invention suggested a method to for a user equipment according to claim 1. It is further suggested according to a second aspect of the invention a user equipment according to claim 7.
In a third aspect of the invention it is suggested a method for a cellular network component according to claim 11. In a fourth aspect of the invention it is proposed a cellular network according to claim 13. In a fifth aspect the invention relates to a remote server according to claim 15.

According to the first aspect of the invention it is proposed a method for a user equipment operating in a cellular network, configured for supporting at least one IP-based multimedia service, the user equipment comprising a stored set of configuration parameter for the IP based multimedia service, comprising the steps of:
- sending a request message for the IP-based multimedia service to the cellular network,
- in case of not receiving a confirmation message for said request message: sending a data message via non-access-stratum messaging to the corresponding network component.
The inventive method of this aspect of the invention relates to a user equipment operating in a cellular network. Such cellular network is in particular capable of supporting a wireless cellular technology standard like 4G (LTE) or 5G (NR = New Radio). For that it comprises a plurality of base stations, which form the interface of the cellular network to the user equipments.
The user equipment usually comprises a transceiver, respectively receiver and transceiver circuitry, processing circuitry, volatile and or permanent memory and an antenna. Further the user equipment may be composed of a communication unit comprising the components necessary for communicating with the base station, in particular a cellular modem, and an application part, typically comprising an application processor and some kind of user interface.

Preferably a user identification circuit cards is comprised or communicatively coupled with the user equipment for maintaining the access credentials for the respective home or visited cellular network.
Such user equipment might also be incorporated in another device or apparatus, like a car entertainment unit, house automation resp. alarm system or an elevator control unit.
In particular for the latter mentioned device types it is paramount to be reachable from e.g. a remote server resp. central control site.
In earlier technology standards like 2G or 3G - as long as the user equipment was located in a cell of a base station - this was assured by the possibility to send short messages via the SMSC of the cellular network. The SMS service was based on the circuit switched (CS) domain which required no special configuration as with the PS domain. In the early days 4G/LTE also had/has the possibility to do a CS attach and use the SMSC circuitry SMS capabilities of the cellular network. However cellular networks and network operators are trying to move to a PS network only which is easier and lower in costs for maintenance.
With the advent of new technologies, and the tendency to reduce the coverage of the legacy networks, this situation has changed. Starting with 4G, short messages could be handled via an IP based multimedia service like the IMS service, which is packet based communication. However this requires a well configured IMS service, which is not always - in particular when roaming or being freshly deployed - assured anymore. While the legacy SMS service was still available, a user equipment could send an SMS with most important user data. When the legacy networks are not available anymore, this fallback solution will not work anymore.
This is where the invention comes into play.
In order to assure the continued communication with cellular networks, where IP based multimedia service is supported, the user equipment needs to be able to submit a message regardless if the IP based multimedia service is well configured or not.

For that it is according to the inventive method suggested to send a request message for an IP based multimedia service to the cellular network. This is done by the available configuration of the IP based multimedia service, in particular IMS.
Such configurations comprise in particular an URL, APN, the P-CSCF address. IMS specific configurations related to voice and SMS service and a related set of values is defined in 3GPP TS24.167, additional IMS device configuration guidelines and services are released by GSMA for e.g. roaming. Obviously a misconfiguration of such parameter might lead to a fully inoperable message service via the PS domain.
The user equipment does not know at that time, in particular when operating in a cellular network where it was not operating before, if the configuration of the IP based multimedia service is working properly or not.
Therefore it is foreseen that the user equipment tries with this request message, if the configuration is at least good enough to reach the IMS server. If it is working, then nothing else is to do. In that case reaching the IMS server may especially mean starting the SIP protocol with the IMS server and requesting respective IMS server i.e. IMS via SMS and if further purposes are also needed performing this request with VoLTE or ViLTE in addition (Voice and Video Services are also available via IMS besides SMS).
If the IMS registration is not acknowledged for SMS or IMS server can't be reached at all the user equipment needs to take measures. There are several options for the user equipment to figure out that the configuration was not appropriate.
This is in particular the case of at least one out of the group of:
- receiving a reject message and
- expiring of a timer,
- expiring of a timer for predetermined number of consecutive attempts.
This means, the user equipment in the first option figures out by receiving a reject message, that the configuration is not accurate. This is in particular the case, when the request message arrived at the IMS server of the cellular network, but was not accurate or at least not understandable. Or in case of roaming scenario the UE may not be accepted for services via IMS by the roaming network. Then preferably the IMS server sends, in particular responds, with a reject message indicating that situation.
However, this option will not work, when the IMS server cannot be reached, in particular when the URL / APN of the IMS server is not correct. In that case it can happen that the request is sent anywhere. In particular in the case of roaming the home APN may be addressed, which does not help. However in this special situation it could be solved by communication between home APN and the APN of the visited cellular network.
When the IMS server is not reached, it is advantageous to establish a timer. If the timer has expired without a response, then the user equipment is supposed to assume, that no confirmation message is sent, meaning the configuration of the IP based multimedia service is not correct.
Preferably - as third option - this is carried out with a retry mechanism, meaning that a predefined number of messages is sent out, and the timer expires in particular repeatedly until the user equipment decides that no confirmation message was received.
In particular for non-time-critical user equipments resp. communication this is favorable, as it avoids a reconfiguration, which is not necessary due to some time-lags in the cellular network or momentary bad radio conditions leading to the situation where the UE message is not received by the base station.
When the user equipment detected, that no confirmation message arrives, then it sends a data message via non-access-stratum messaging to the corresponding network component.
Non-access-stratum (NAS) messaging is a way of transporting SMS messages between network, in particular the MME and user equipment. It is initiated by sending an "uplink NAS Transport Message". Only precondition is to be registered for EPS Services.
The corresponding network component is in particular a network component which has access to the server resp. network for IP based multimedia service. This could be the MME, or the AMF, in particular depending upon the technology standard of the base station.

Preferably the sending of a message NAS messaging comprises a subset of the originally sent message, preferably comprising the most important information to be sent to the remote server.
With that it is assured that the SMS can reach the SMS service server, although the IMS configuration is not accurate. Furthermore said message contains already an indication related to the wrong configuration related to the IP-based multimedia server. That indication can be part of the NAS message *signaling part* or in said corresponding *payload part*, depending on at least one of the method and/or the entity being the recipient of said indication.
If it is contained in the message payload part, it is to be evaluated by the receiving SMS server, receiving most important data and indicating that SMS via IMS could not be used because of the configuration.
If said indication is part of the signaling part it is directly evaluated by a network element i.e. the MME/AMF, being a network component which has connection to the server for IP based multimedia service i.e. the MME and can evaluate PCSCF IP address or whether other configuration was wrongly used to reach the IMS service.
According to another preferred embodiment it is proposed that the step of sending the data message is carried out in case the reject message comprises a cause indicating a wrong IP-based multimedia service configuration.
With this embodiment it is referred to the situation of receiving a response from the IMS service which is not a confirmation message, but a reject message. According to the embodiment the reject message further comprises a reject cause.
The reject cause can have various values. One of the possible values is a value indicating a wrong IP based multimedia service configuration. Other values can in particular be a general service degradation, temporary unavailability, subscription issues or other problems, that are unrelated to the configuration of the IP Based multimedia service.
With the reject cause it is assured that the user equipment only carries out the data message transmission via non-access-stratum messaging when a configuration issue appears, in particular when the access to the IP based multimedia service is not possible at that time to avoid additional tries, including via NAS messaging.
This reduces signalling on the air interface and power consumption on the user equipment side.
In another preferred embodiment it is proposed that in case the situation of not receiving a confirmation message is detected through timer expiration, the method further comprising the step of receiving a response message in response to the step of sending the data message, wherein the response message comprises the cause indicative to wrong configuration.
With this embodiment the situation of the previous embodiment is tried to apply on the situation of a timeout, that means no response message is retrieved at all. When then once a data message is submitted through the NAS signalling, the response indicating the cause of the timeout is indicated, in particular when a wrong configuration appears.
This embodiment is in particular, but not exclusively, helpful for another advantageous embodiment. According to that embodiment it is proposed that the step of sending the data message comprises submitting an information indicative of the cause relating to wrong IP-based multimedia service configuration, and in response receiving a message comprising configuration information for configuring the IP-based multimedia service, amending the stored set of configuration parameter for IP-based multimedia service based on said received configuration information.
This embodiment is intended to overcome the situation of a wrong configuration, and offer a solution, if no confirmation message was received to solve the issue, should the wrong configuration be the reason for the rejected or not even arrived request message to the IMS server.
For this advantageously an information indicating the cause relating to wrong IP-based multimedia service configuration is received, be it with the reject message or - following a timeout - after sending an NAS message.
Therefore it is suggested to receive from the cellular network, in particular a network component coupled to the IMS server, including the IMS server itself, a message comprising configuration information for configuring the IP based multimedia service.
Preferably such message only comprises the information that need to be used for correcting the configuration, while already correct or uncritical information do not require to be transmitted again. This saves signalling load and speeds up the procedure.
Consequently the user equipment reconfigures the locally stored configuration with the received data. Preferably such configuration data are sent as delta update, that means only the wrong configurations are submitted.
This embodiment of the invention advantageously assures that a user equipment with a wrong configuration of the IP based multimedia service is capable of carrying out IMS messaging after a few messages via present cellular network communication channels.
In another advantageous embodiments it is suggested that the method further comprising sending the data message to a messaging slice of the cellular network, wherein the step of sending the data message over the non-access-stratum messaging is carried out only in case of unavailability of the messaging slice.
This embodiment refers to the slicing concept which was introduced with the new standard of 5G (New Radio). Herein a slice is a virtualized and independent logical network in a cellular network, dedicated for certain services and/or user equipments.
It is suggested to have available a slice for messaging purposes. If this is the case it is therefore suggested as part of this embodiment to use the messaging slice for sending the message to the IMS server.
Typically through so-called discovery mechanisms the user equipment knows about the availability of the messaging slice. Alternatively or additionally in cellular networks the messaging slice is standardized and therefore accessible by the same way for each user equipment. This is in particular the case for so-called *global slices.* Hence, when the messaging slice is a global slice this embodiment may easily be applied.

The availability of a messaging slice may also be indicated by a broadcast, e.g. through System Information Blocks (SIBs).
When the messaging slice is available, the user equipment is supposed to use the messaging slice instead of NAS signalling.
Hence, for a user equipment operating in a 5G network with a (global) messaging slice, the method comprises to send the data message via the messaging slice.

In the second aspect of the invention it is proposed a user equipment for operating in a cellular network, the user equipment being configured for using an IP based multimedia service of the cellular network, the user equipment further comprising a storage unit for storing a set of configuration parameter for the IP based multimedia service, wherein the user equipment is configured:
- to send a request message for the IP-based multimedia service to the cellular network,
- in case of not receiving a confirmation message for said request message: to send a data message via non-access-stratum messaging to the corresponding network component.
This aspect of the invention relates to a user equipment operating in a cellular network, in particular supporting the technology standard of 4G and/or 5G and beyond.
The user equipment is equipped with processing circuitry for executing the firmware software that in particular implements the protocol stack for the respective standard compliant exchange with the serving base station of the cellular network. The user equipment is in particular capable of operating on base stations of different technology standards.
The user equipment further comprises transmitting and receiving circuitry, preferably a transceiver, and one or more antennas. Furthermore it preferably comprises volatile and permanent memory components for storing the firmware software, configuration information etc.
Additionally the user equipment is communicatively coupled to a user identification circuit card, having stored access credentials for at least one cellular network. Such credentials, respectively the user identification circuit card is provided by the operator of said cellular network.
The second aspect of the invention shares the advantages of the first aspect of the invention.

According to the third aspect of the invention it is proposed a method for a cellular network being capable of supporting an IP-based multimedia service, comprising the steps of:
receiving a data message from a user equipment operating in said cellular network, the data message being submitted via non-access stratum messaging and comprising an information indicative of a wrong configuration for IP-based multimedia services,
in response submitting comprising configuration information for configuring the IP-based multimedia service to the user equipment.
This aspect of the invention relates to the cellular network where the user equipment according to the second aspect of the invention is operating with.
Such cellular network provides a IP based multimedia service, which is preferably carried out by at least one cellular network component by way of a IMS server. Such server is in particular reachable by IP based routing, that means it provides an IP address or via a name server a URL for getting access to said IMS server, in case the IP address or URL is well configured in the user equipment that is operating in said cellular network.
However this is not generally the case, in particular for user equipments roaming in said cellular network.
Hence the cellular network supports the user equipment by when it receives a not well configured data message at the IP based multimedia servicing component (in particular the IMS server), that it responds with a message comprising the correct configuration information.
This requires that the first message from the user equipment is actually received at the IMS server.

Further the cellular network provides NAS messaging capabilities, so that a user equipment of the second aspect of the invention may use this instead of the IP based multimedia service to send its data message to the IMS server.
If by this way a message is retrieved at the IMS server, then this aspect of the invention encompasses, that the configuration message is sent to the user equipment also in case of a received message via NAS messaging.
Preferably only those information are submitted to the user equipment which are not well configured, or at least are necessary. For correct configurations there is no need to submit such configuration data again.
The third aspect of the invention shares the advantages of the first and second aspect of the invention.
In a preferred embodiment it is proposed that the cellular network being configured to support network slicing, and comprises a messaging slice, wherein step of receiving the data message is carried out through said messaging slice.
According to this embodiment the cellular network further provides a messaging slice. Such slice is part of the 5G slicing concept. Hence, in particular when the messaging slice is a global slice, the cellular network gives the user equipment the opportunity to use this slice for sending the data message, or at least for informing about an unsuccessful data transmission via the IP based multimedia service.
Through the messaging slice such a data message from the user equipment is then forwarded to the appropriate network component, in particular the IMS server or any other remote server, which is configured to respond in particular with an update of the IP based messaging service configuration.

In a fourth aspect of the invention it is proposed cellular network capable of supporting an IP based multimedia service, the cellular network being configured to:
receive a data message from a user equipment operating in said cellular network, the data message being submitted via non-access stratum messaging and comprising an information indicative of a wrong configuration for IP based multimedia services,
in response submit comprising configuration information for configuring the IP-based multimedia service to the user equipment.
This aspect relates to the cellular network for serving user equipments. It is preferably configured to support one or more cellular technology standards, in particular 4G and 5G.
This comprises base stations as interface to the served user equipments. Such base stations are configured to decode messages from the user equipments according to respective technology standard and provide appropriate responses, send broadcasting messages etc.
The cellular network is further configured to server user equipments that have access credentials from other cellular networks, that is they are roaming in this cellular network. For that the cellular network is capable to access other cellular network from other operators, preferably in other countries, in order to check the integrity of the supplied access credentials.
The cellular network comprised components for establishing a IP based multimedia service, in particular one or more IP based multimedia servers, like an IMS server.
Additionally the cellular network provides a non-access stratum messaging channel, which can be addressed by the user equipments camping in the cellular network.
The fourth aspect of the invention shares the advantages of the third aspect of the invention.

In a fifth aspect of the invention it is suggested a remote server communicatively coupled to at least one cellular network, the remote server being configured to support handling of user equipments capable of operating in said at least one cellular network through an IP-based multimedia service
wherein the remote server is configured to determine that the communication of at least one user equipment is disturbed,
instruct the cellular network to send a non-access stratum message with information relating to the IP based multimedia service.
This aspect of the invention relates to a remote server which is communicatively coupled to the cellular network. It is in particular capable of being reached via IP based communication, that is the internet.
The remote server provides preferably a memory unit, in particular a data base, where information relating to a plurality of user equipments, including such according to the second aspect of the invention, are stored, in particular an identification like MSISDN, IMSI, IMEI etc.
The remote server in particular awaits regularly messages from at least a subset of the user equipments for which identification are stored in its data base.
According to the invention, the remote server is configured to send an indication to a cellular network, where the user equipment is currently operating in, should it figure out that the communication is disturbed.
Such disturbance in particular encompasses the situation of a wrong configuration for accessing the IP based multimedia service.
In that case the remote server is supposed to trigger said cellular network to send a reconfiguration message to the respective user equipment. Or the remote server itself is aware of the correct configuration setting, i.e. for newly launched networks or updated networks, in such cases it may provide the new configuration as signaling message to the UE.
With that aspect of the invention the user equipment gets support from the remote server in case of a wrong configured IMS service. Hence further steps by the user equipment are saved, and the cellular network makes available nonetheless the correct configuration information.
With this step the user equipment is relieved from additional programming logic in order to request an appropriate configuration, if the currently available configuration for the IP based multimedia services is not available.
In particular for user equipments with reduced functionality this aspect of the invention is advantageous.

Apart from this the fifth aspect of the invention shares the advantages of the previous aspects of the invention.

As it is shown this invention advantageously solves the depicted problem and offers a solution where user equipments can continue the usage of IP based multimedia service, in particular messaging even in case of misconfiguration.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents the situation of a device of the type to which the present invention is applied as an embodiment in conjunction with a cellular network and the involved components;
- Fig. 2: shows a flowchart representing an exemplifying embodiment of the inventive method;
- Fig. 3: represents another exemplifying situation of a device of the type to which the present invention is applied as an embodiment in conjunction with a remote server.

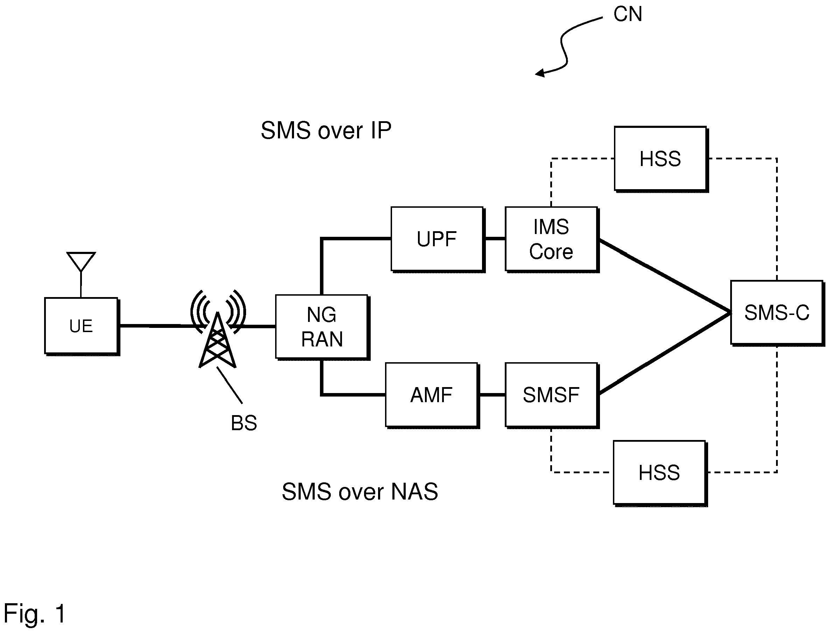

FIG. 1 schematically shows a user equipment UE of the type to which the present invention is applied as an embodiment in conjunction with components of a 5G cellular network CN as it is one exemplifying use case of applying the inventive method.
The cellular network comprises a Next Generation Radio Access Network (NG RAN), which is connectively coupled to at least one base station BS. Via the base station BS the user equipment UE is able to operate with the cellular network CN, in particular send and receive data messages.

From the NG RAN the regular way of sending a IP based multimedia service message, in particular SMS over IP, via the UPF to the IMS core. The IMS core is basically the IMS Server, the UPF is the user plane function in 5G. This is an IP based path through the cellular network CN, and requires for routing such request an appropriate address of the IMF Core. This is in particular an IP Address or URL for reaching the IMF Core, which needs to be preconfigured in the user equipment UE.
If everything is working fine, a SMS over IP is handed over to the SMS-Center (SMS-C), and from there it may be distributed to the addressed user equipment, which can also be camping on a base station of another server. This part is well known since establishment of the Short message service in cellular network and can be omitted here.
Additionally the cellular network provides another way for message sending, which is through the non-access stratum NAS. For doing so, a message is routed through the NG RAN via AMF and SMSF to the short message service center SMS-C. The shown SMS-C is the same is for SMS over IP. However in some embodiments a legacy SMS-C for NAS messaging is used, while for SMS over IP messaging another SMS-C is in place.
The AMF is the Access and Mobility Management Function and the SMSF is the SMS-Function for SMS over NAS.
In this case the SMS is used for updating the connectivity functionality for IMS related services, either by the receiving message server being aware of the configuration to be used by the UE in said cellular network. Otherwise it is provided by the UE as part of the NAS signalling to the MME and MME being connected to the P-CSCF i.e. the entry node for the IMS subsystem. The MME can provide said information as NAS signalling in downlink (DL) to the UE. Whilst if coming from the SMS receiving server the new configuration comes as message part of DL NAS signalling to the UE.
However, when a user equipment wants to send a data message via SMS via IP it requires a correct configuration of the IMS Core, in particular the address, but also other parameter.

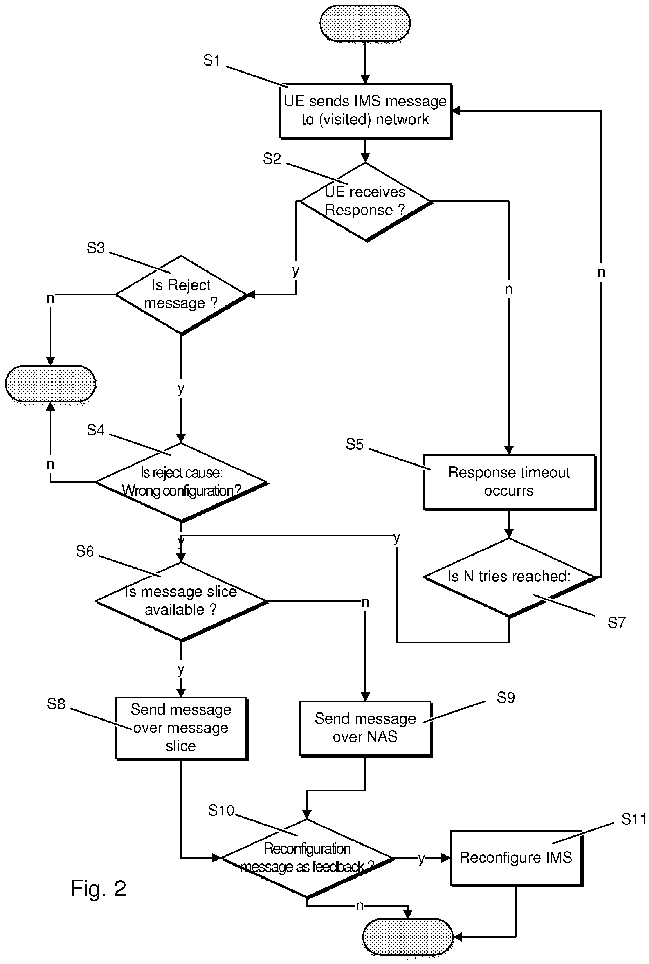

In FIG. 2 it is shown, how such situation is handled according to an exemplifying embodiment of the invention.
In step S1 the user equipment UE, which is camping on a base station BS of the cellular network CN is sending an IMS message to the cellular network. This sending is carried out considering the locally stored preconfiguration for IMS Services. However, the UE could be operating in a visited network, or somehow lost the preconfiguration.
If this is the case needs to be figured out first.
Hence, in step S2 it is checked if the user equipment receives a response from the cellular network, in particular the IMS core.
If no response message has arrived, in particular after a predetermined time period, then the message flow branches to step S5, and it is determined that a response timeout has occurred. With step S7 it is then checked if a preconfigured number of retries have been carried out. If this is not the case, then the procedure flow branches back to step S1, otherwise to S6.
When the predefined number of retries have been reached, the user equipment UE can assume that the data transmission to the IMS core was unsuccessful. However, it has no indication about the cause of not receiving a response.
Should however the user equipment receive a response in step S2, that does not tell, that all went find. Instead the received response needs to be checked as indicated in step S3. If the message is a confirmation message, then the process flow ends, that means the data transmission of S1 has been successful.
If the message is a reject message, then the flow branches to step S4 where it is figured out, what is the reject cause. Such a reject cause is preferably transmitted with the reject message from the cellular network, reps. the IMS core.
There are a couple of reject cause possible, including temporary network issues, congestion etc. Such causes cannot be solved by the user equipment UE, and are not part of this invention, therefore in such cases the flow branches from step S4 to an end of the process.

However, in case of a reject cause indicating a wrong configuration of the user equipment, the process flow branches to step S6. In this step it is checked of a messaging slice is available. This may be the case in 5G networks, and this further comprises knowledge of the user equipment of this messaging slice. This is in particular the case when the message slice is a global slice. Alternatively the user equipment has knowledge about the slice due to a slice discovery.
The messaging slice is available and comprises the preconfiguration to forward the message to the appropriate recipient. The advantage is that said slice is accessible via a simple configuration and if used as global slice should be accessible everywhere. However the capabilities of said general slice can be restricted in terms of throughput and service. Hence it could be used for providing most important information and request for configuration for full access.
The support of the global slice could be indicated by the cellular network respectively by the UE or when doing initial registration by the UE including the related NSSAI (Network slice selection assistance information) to establish connection to said SMS MESSAGING SLICE. Information received by said slice can include the UE identity which can be used by the AMF to retrieve from the home location register (HLR or HSS, if necessary the home location register of the roaming device) the IP address to which such information shall be routed i.e. the home server of said UE.
If this is the case then the user equipment may send a message, in particular the data message through the messaging slice.
If not message slice is available for the user equipment, the message is sent over the Non Access Stratum NAS.
In any case it is checked in step S10, if in response to the message a reconfiguration message is retrieved at the user equipment. This is in particular transmitted when via NAS or messaging slice the IMS Core gets knowledge about the data message, and the configuration of the user equipment for usage of the IMS service. In that case an update of the configuration is made available, and in step S11 finally locally updated in the user equipment UE.

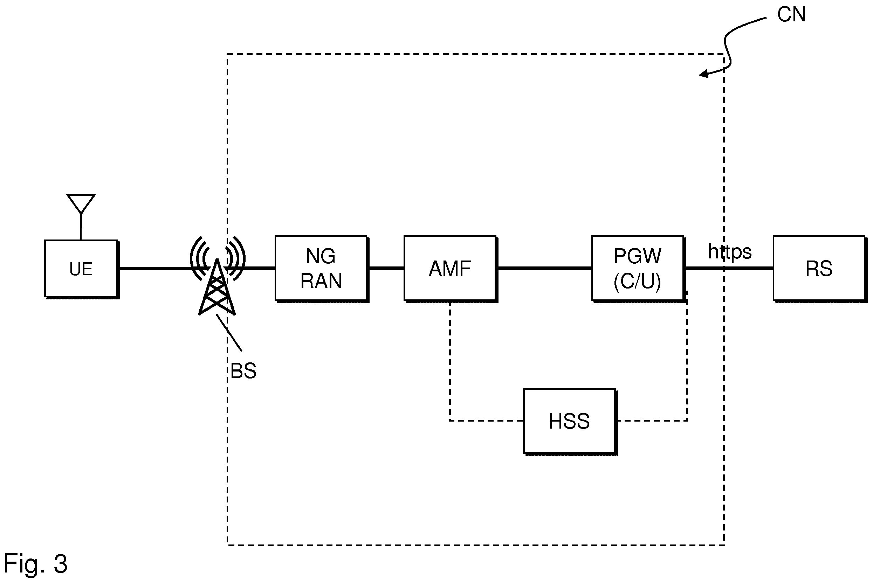

In FIG. 3 it is shown the configuration of the cellular network CN in conjunction with a remote server RS. The user equipment UE is preferably registered in a database of the remote server RS.
Through the shown components of the NG RAN, the AMF and the packet data network gateway PGW (also known as PDN-GW), which is the anchor between cellular network and other services like the internet.
Through this PGW the remote server is accessible from the cellular network in particular via a bidirectional https-based connection.
Preferably the user equipment is configured to regularly send data to the remote server RS. If no such data transmission is received at the remote server, it then uses the available connection link or an alternative maintenance related connection link to the cellular network, to inform the cellular network about the presently detected unavailability of the user equipment.
The cellular network, or respective components of it are then instructed to take appropriate steps to instruct the user equipment to operate correctly in the cellular network. Such steps may involve in particular the transmission of a reconfiguration message as indicated to be checked in step S10 of previous figure.
With that the remote server may trigger the cellular network to make the user equipment up and running again, without requiring an active involvement of the user equipment.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for a user equipment (UE) operating in a cellular network (CN), configured for supporting at least one IP-based multimedia service, the user equipment (UE) comprising a stored set of configuration parameter for the IP based multimedia service,
comprising the steps of:
- sending a request message for the IP-based multimedia service to the cellular network (CN),
- in case of not receiving a confirmation message for said request message: sending a data message via non-access-stratum messaging to the corresponding network component.

2. Method according to claim 1,
comprising detecting the situation of not receiving a confirmation message by means of at least one out of the group of:
- receiving a reject message and
- expiring of a timer,
- expiring of a timer for predetermined number of consecutive attempts.

3. Method according to claim 2,
wherein the step of sending the data message is carried out in case the reject message comprises a cause indicating a wrong IP-based multimedia service configu ration.

4. Method according to claim 2.
wherein in case the situation of not receiving a confirmation message is detected through timer expiration, the method further comprising the step of receiving a response message in response to the step of sending the data message, wherein the response message comprises the cause indicative to wrong configuration.

5. Method according to at least one of the claims 1 to 4,
wherein the step of sending the data message comprises submitting an information indicative of the cause relating to wrong IP-based multimedia service configuration, and in response receiving a message comprising configuration information for configuring the IP-based multimedia service, amending the stored set of configuration parameter for IP-based multimedia service based on said received configuration information.

6. Method according to at least one of the previous claims,
further comprising sending the data message to a messaging slice of the cellular network (CN),
wherein the step of sending the data message over the non-access-stratum messaging is carried out only in case of unavailability of the messaging slice.

7. User equipment (UE) for operating in a cellular network (CN), the user equipment being configured for using an IP based multimedia service of the cellular network (CN), the user equipment (UE) further comprising a storage unit for storing a set of configuration parameter for the IP based multimedia service,
wherein the user equipment (UE) is configured:
- to send a request message for the IP-based multimedia service to the cellular network (CN),
- in case of not receiving a confirmation message for said request message: to send a data message via non-access-stratum messaging to the corresponding network component.

8. User equipment (UE) according to claim 7,
configured to detect the situation of not receiving a confirmation message by means of at least one out of the group of:
- reception of a reject message and
- expiration of a timer,
- expiration of a timer for predetermined number of consecutive attempts.

9. User equipment (UE) according to at least one of the claim 7 or 8,
wherein the sending of the data message comprises to submit an information indicative of the cause relating to wrong IP-based multimedia service configuration,
and in response to receive a message comprising configuration information for configuring the IP-based multimedia service,
and to amend the stored set of configuration parameter for IP-based multimedia service based on said received configuration information.

10. User equipment (UE) according to at least one of the claims 7 to 9,
further being configured to send the data message to a messaging slice of the cellular network (CN),
wherein the sending of the data message over the non-access-stratum messaging is carried out only in case of unavailability of the messaging slice.

11. Method for a cellular network (CN) being capable of supporting an IP based multimedia service, comprising the steps of:
receiving a data message from a user equipment (UE) operating in said cellular network (CN) the data message being submitted via non-access stratum messaging and comprising an information indicative of a wrong configuration for IP based multimedia services,
in response submitting comprising configuration information for configuring the IP-based multimedia service to the user equipment (UE).

12. Method according to claim 11,
wherein the cellular network (CN) being configured to support network slicing, and comprises a messaging slice,
wherein step of receiving the data message is carried out through said messaging slice.

13. Cellular network (CN) capable of supporting an IP based multimedia service, the cellular network (CN) being configured to:
receive a data message from a user equipment (UE) operating in said cellular network (CN), the data message being submitted via non-access stratum messaging and comprising an information indicative of a wrong configuration for IP based multimedia services,
in response submit comprising configuration information for configuring the IP-based multimedia service to the user equipment (UE).

14. Cellular network (CN) according to claim 13,
further being configured to support network slicing, and comprising a messaging slice,
wherein said receiving of the data message is carried out through said messaging slice.

15. Remote server (RS) communicatively coupled to at least one cellular network (CN), the remote server (RS) being configured to support handling of user equipments (UE) capable of operating in said at least one cellular network (CN) through an IP-based multimedia service
wherein the remote server (RS) is configured to determine that the communication of at least one user equipment (UE) is disturbed,
instruct the cellular network (CN) to send a non-access stratum message with information relating to the IP based multimedia service.
